# EUROPEAN PATENT SPECIFICATION

(11) **EP 2 606 250 B1**
(45) Date of publication and mention of the grant of the patent: **18.06.2014**
(21) Application number: 11769953.8
(22) Date of filing: 19.08.2011
(51) Int. Cl.: F16D 1/116, F16D 3/38, F16D 3/84

(54) **PROTECTIVE CASING WITH A MOVABLE LEVER FOR A COUPLING SPLINED YOKE WITH A SAFETY PIN**
SCHUTZGEHÄUSE MIT EINEM BEWEGLICHEN HEBEL FÜR EINEN KUPPLUNGSKEILBÜGEL MIT EINEM SICHERHEITSSTIFT
BOITIER DE PROTECTION A LEVIER MOBILE POUR UNE FOURCHE D'ACCOUPLEMENT CANNELEE POSSEDANT UNE GOUPILLE DE SURETE

(30) Priority: 20.08.2010 SI 201000254
(43) Date of publication of application: 26.06.2013
(73) Proprietor: Cerjak D.o.o., 8273 Leskovec pri Krskem (SI)
(72) Inventor: KONECNIK, Stanislav, 3257 Podsreda (SI); CERJAK, Matjaz, 8263 Cerklje ob Krki (SI); VOGRINC, Vilko, 8250 Brezice (SI)
(74) Representative: Flak, Antonija
(86) International application number: PCT/SI2011/000045
(87) International publication number: WO 2012/023905

(56) References cited:
- EP-A1- 0 464 006
- GB-A- 430 713
- US-A- 4 859 110
- US-A1- 2010 120 545

## Description

### Field of Invention

The subject of the invention belongs to the field of transmission shafts or connecting elements for a coupling between a driving machine and a driven shaft.

### Technical Problem

The technical problem is a construction solution to a coupling spline yoke assembly that must allow a simple form without sharp or protruding parts, which will contribute to a better grip in a user's hand due to the ergonomic shape and minimal needed force for coupling or resisting the spring force.

The problem to be solved by the present invention may be regarded as how to provide an alternative protective casing allowing easy coupling/uncoupling of a shalt to a yoke, and protecting the transmission shaft against axial movements on the coupling and driven shalt.

### Prior Art

Patent application EP0464006 discloses a solution to the assembly that is considerably different in its function than that in the present invention.

A hollow protective casing for a coupling is provided, the casing being covered by a cover and a yoke is provided with a safety pin and a spring. The yoke is the basic connecting element for coupling or uncoupling of a transmission shaft, the safety pin is an element preventing axial movements of the coupling and the spring enables the proper positioning of the safety pin. The casing enables a proper position and function of the remaining elements and connects them into an entity. The cover acts as a protection of the interior of the casing. A spring ring prevents axial movement of the casing and prevents falling it off from the coupling splined yoke. A user must rotate a rotating sleeve for approximately 45°, which allows coupling of a transmission shaft to a machine. Due to a new characteristic construction of the present invention handling by a user is easier as less effort is needed to reach the same effect as in the mentioned solution.

JP5187455 (A) discloses a solution to the assembly, in which a user must rotate the safety sleeve for approximately 45° when fastening a transmission shaft to a machine.

Patent application US4859110 (A) discloses an invention that is functionally considerably different than the present invention. A user must rotate a safety collar for approximately 90° to be able to fasten a transmission shaft to a machine.

Patent application JP61041017 (A) describes a solution based on the principle of movement of a slide collar in direction of the transmission shaft axis. In the present invention no force needs to be exerted in the axis of the transmission shaft when the element protecting axial movements of the transmission shaft is actuated, which provides for an easier mounting of the transmission shaft.

The invention disclosed in US4433934 (A) has a very demanding construction and consequently a very demanding production. As a result, more energy is used per product unit, which contributes to a higher price of the product, which makes it uncompetitive. Manufacturing of the present invention consumes much less energy, which results in lower production costs and a better competitive position on the market.

### Solution to the Technical Problem

The essence of a protective casing with a movable lever for a coupling splined yoke with a safety pin lies in that it is shaped in a way that minimum pushing force on the lever is required to move the pin with the spring arranged within the casing with a cover into an adequate position. This enables a simple mounting and a secure protection of the coupling splined yoke - transmission shaft against axial movements on the coupling and driven shaft of a machine.

The protective casing with a movable lever for a coupling splined yoke with a safety pin of the invention will be described in more detail by way of figures, representing in:

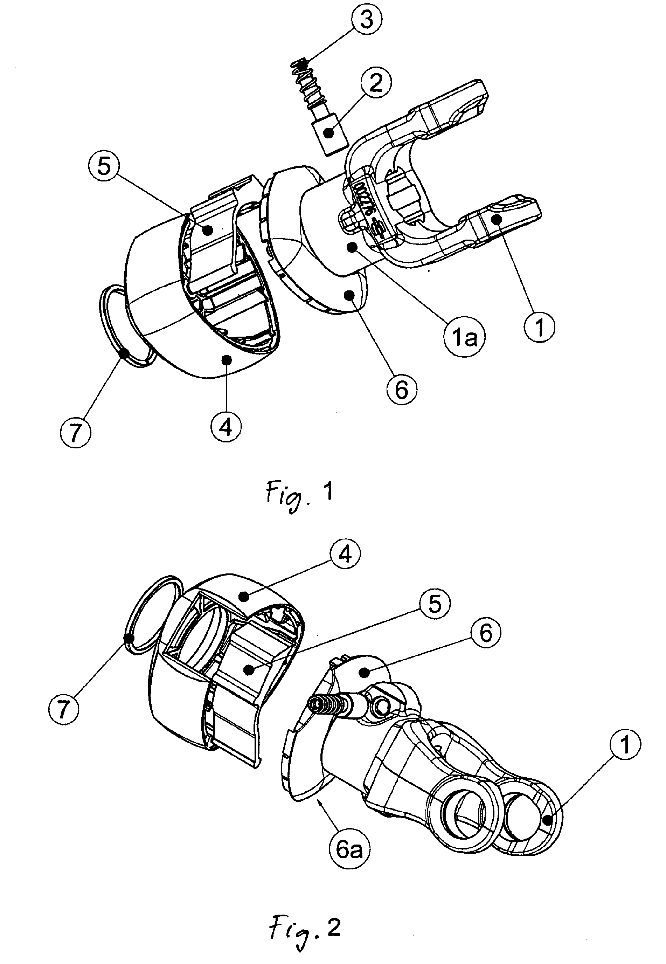

Figure 1 - assembly of a coupling splined yoke with a protective casing
Figure 2 - assembly of a coupling splined yoke with a protective casing

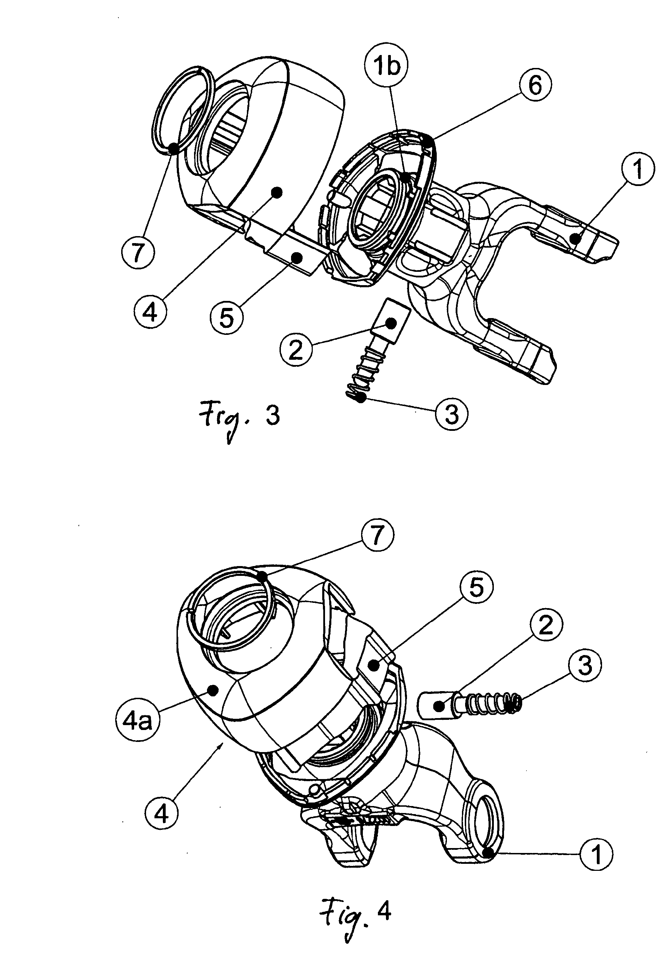

Figure 3 - assembly of a coupling splined yoke with a protective casing
Figure 4 - assembly of a coupling splined yoke with a protective casing

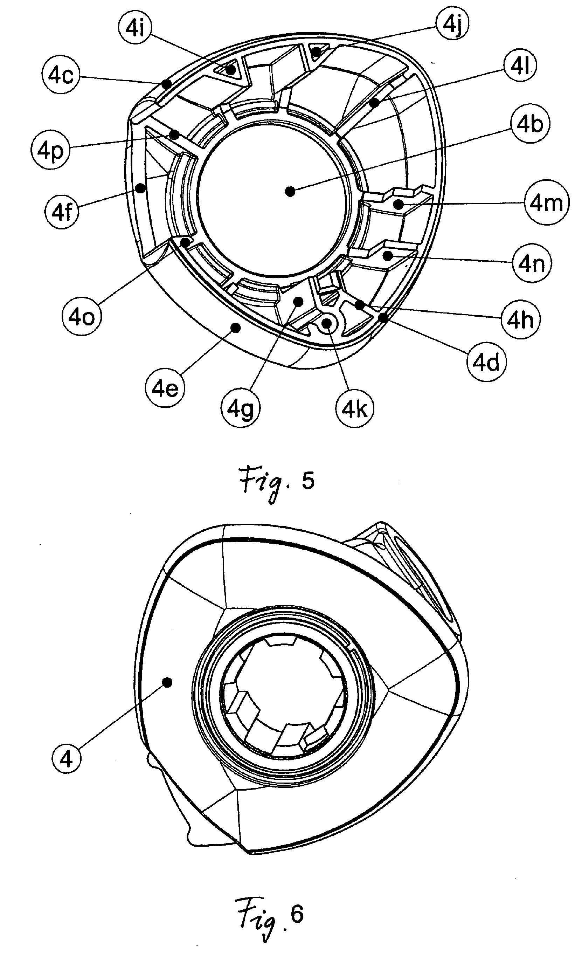

Figure 5 - protective casing 4
Figure 6 - protective casing 4

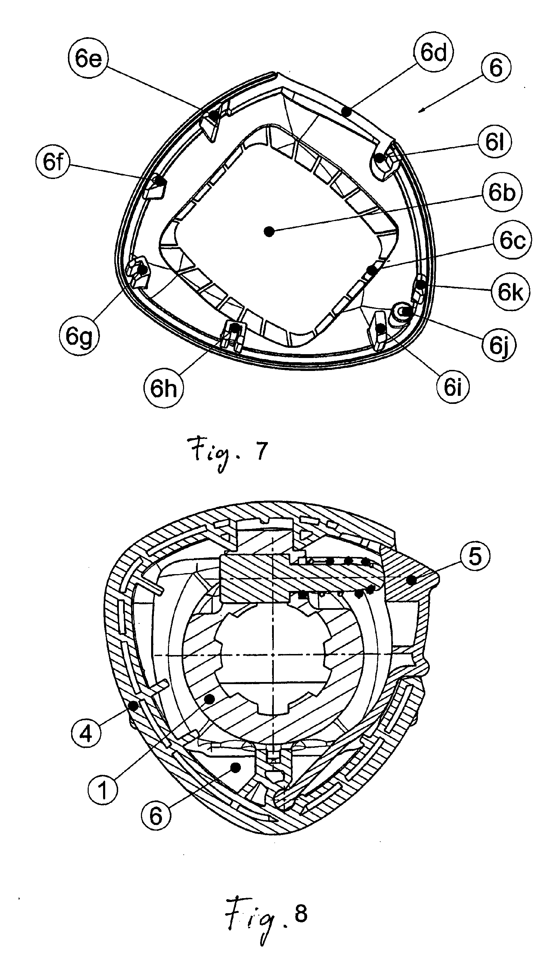

Figure 7 - cover 6 of the casing 4
Figure 8 - operation principle - position for mounting

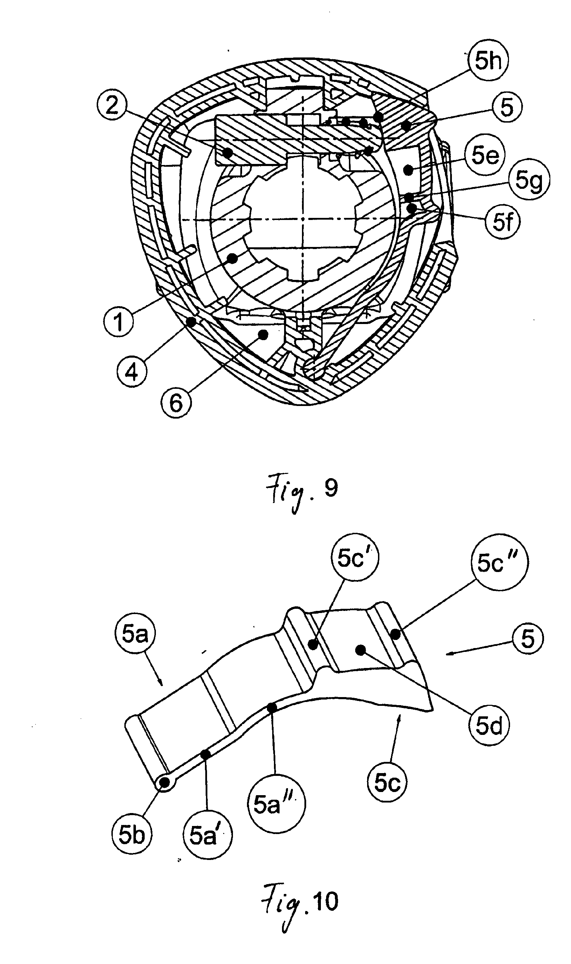

Figure 9 - operation principle - position during functioning
Figure 10 - lever 5.

The protective casing with a movable lever for a coupling splined yoke with a safety pin of the invention is characterized by a hollow casing 4 of a triangular shape with rounded corners. Into the casing 4 there is arranged a lever 5 covered by a cover 6 with a yoke 1 provided with a safety pin 2 and a spring 3. The yoke 1 is the basic connecting element for coupling or uncoupling of a transmission shaft. The safety pin 2 is an element preventing axial movements of the coupling splined yoke 1. The spring 3 prevents the safety pin 2 from falling out. The casing 4 enables a proper position and function of the remaining elements and connects them into an entity. The lever 5 enables a user to exert less force when moving the safety pin 2 when mounting and dismounting the coupling yoke 1 or the entire transmission shaft. The cover 6 of the casing 4 is meant as a protection of the interior of the casing 4 against impurities from the environment. A spring ring 7 prevents axial movement of the casing 4 and prevents the casing 4 from falling off the coupling splined yoke1.

The casing 4 is shaped like a low triangular vessel with a rounded hole 4b in the centre of a bottom 4a walled with rounded walls 4c, 4d, 4e and ended by an opening 4f between the walls 4c and 4e. The interior of the casing 4 is divided into chamber by means of ribs having various shapes.

Between the wall 4e and the opening 4b there is a rib 4g creating together with the rib 4h and part of the wall 4d a triangular surface on the upper part of the casing 4. A rotation point 4k of the lever 5 is designed at the rib 4g. Triangular openings 4i and 4j are designed on the wall 4c. A rib 4l is arranged on the rounded contact between the walls 4c and 4d. A rib 4m and a rib 4n are arranged between the rib 41 and the rib 4h. A rib 4o is arranged between the opening 4b and the wall 4e. The opening 4b is provided with the rib 4o and a rib 4p. The openings 4i and 4j, the rib 4l, the rib 4m, the rib 4n, the rib 4o and the opening between the ribs 4h and 4g are designed to allow positioning of the cover 6.

The lever 5 acts as an intermediary between a user's finger/hand and the safety pin 2. The lever 5 is designed as a slightly bent plate 5a with a cylindrically formed front section 5b. The plate 5a has a flat section 5a' that slightly projects to a section 5a" and continues to a section 5c. The section 5c of the lever 5 is slightly bent downwards, wherein the upper section is shaped in a way that a straight surface 5d is ergonomically shaped between the semi-circular sections 5c' and 5c". The bottom of the section 5c is provided with approximately rectangular openings 5e, 5f and 5g, wherein the rectangular surface 5h is arranged upstream the opening 5e. The safety pin 2 abuts the rectangular surface 5h.

The lever 5 is arranged within the casing 4 in a way that the cylindrically shaped front section 5b is positioned into the rotating point 4k and the section 5c is positioned into the opening 4f.

The shape of the top view of the cover 6 corresponds to the lower part of the casing 4. The external part 6a of the cover 6 is slightly convex and the almost rectangular opening 6b is contoured with blades 6c. In its interior part, the cover 6 has a straight section 6d with a semi-circular section 6l, a projection 6k, a cylindrical section 6j, a rectangular section 6i, a section 6h in the shape of a rectangular U, a section 6g in the shape of a rectangular U and sections 6f and 6e in the shape of triangles.

A neck 1 a of the splined yoke is arranged into the opening 6b provided with blades 6c. The casing 4 with the lever 5 is covered with the cover 6 so that the flat section 6d engages with the opening 4f and the semi-circularly shaped section 6l snaps behind the rib 4o. The projection 6k engages between the ribs 4h and 4g of the casing 4. The cylindrical section 6j of the cover 6 engages with the cylindrical section 4k of the casing 4. The rectangular section 6i, the section 6h in the shape of a rectangular U, the section 6g in the shape of a rectangular U, the sections 6f and 6e in the shape of triangles engage with the sections on the casing 4, with the triangular sections 4i and 4j, the ribs 4l, 4m and 4n and 4k and 4o. The neck (1 a) of the yoke (1) is arranged with its rectangular groove (1b) into the opening (4b) of the casing (4), into which groove (1b) a spring ring (7) is arranged by way of a special tool, so that the upper surfaces of triangular openings (4i and 4j) and the upper sections of ribs (4g and 4h and 4o) get in contact with the internal section of the cover (6). The spring ring 7 is arranged on the yoke 1 and the casing 4 by using a special tool, so that the spring ring 7 is spread apart and arranged into the rectangular groove 1b on the neck 1b of the yoke 1. Once the spring ring 7 is properly arranged within the rectangular groove 1b, it automatically shrinks due to its elasticity.

The construction solution of the protective casing with a movable lever for the coupling splined yoke with a safety pin of the invention allows a simple mounting and dismounting of the transmission shaft onto a machine axle by means of minimum force of a finger. This is rendered possible by the construction of the interior of the casing 4 with the function of lever 5 positioning. The spring ring 7 allows for a proper positioning between the yoke 1 and the cover 6.

As the lever 5 is acted upon with a finger, it causes the movement of the safety pin 2 in the safety pin 2 axis. To achieve this, the force of the spring 3 must be overcome. The coupling mechanism in such position is ready to couple the transmission shaft to a machine or to uncouple it.

In the moment when the lever 5 is no longer acted upon by a force exceeding the force of the spring 3, the safety pin 2 returns to its initial position. In this position, the safety pin 2 prevents axial movement of the coupling yoke 1, which is the basic function of the safety pin 2 and the coupling mechanism.

## Claims

1. A protective casing assembly comprising a coupling splined yoke (1) and casing (4) with a movable lever for said coupling splined yoke (1) with a safety pin for coupling or uncoupling of a transmission shaft, whereby the casing (4) is hollow and of a triangular shape with rounded corners, into the casing (4) there is arranged a lever (5) covered by a cover (6) with a yoke (1) provided with a safety pin (2) and a spring (3); the yoke (1) is the basic connecting element for coupling or uncoupling of a transmission shaft; the safety pin (2) is an element preventing axial movements of the coupling splined yoke (1); the spring (3) enables a proper position of the safety pin (2); the casing (4) enables a proper position and function of the remaining elements and connects them into an entity; the lever (5) enables a user to exert less force when moving the safety pin (2) when mounting and dismounting the coupling splined yoke (1) or the entire transmission shaft; the cover (6) of the casing (4) acts as a protection of the interior of the casing (4) against impurities from the environment; a spring ring (7) prevents axial movement of the casing (4) and prevents the casing (4) from falling off the coupling splined yoke (1); the lever (5) acts as an intermediary between a user's finger/hand and the safety pin (2).

2. Protective casing assembly with a movable lever for a coupling splined yoke with a safety pin according to claim 1, **characterized in that** the casing (4) is shaped like a low triangular vessel with a rounded hole (4b) in the centre of a bottom (4a) walled with rounded walls (4c, 4d, 4e) and ended by an opening (4f) between the walls (4c and 4e); that the interior of the casing (4) is divided into chamber by means of ribs having various shapes; that between the wall (4e) and the opening (4b) there is a rib (4g) creating together with the rib (4h) and part of the wall (4d) a triangular surface on the upper part of the casing (4); that a rotation point (4k) of the lever (5) is designed at the rib (4g); that triangular openings (4i and 4j) are designed on the wall (4c); that a rib (4l) is arranged on the rounded contact between the walls (4c and 4d); that a rib (4m) and a rib (4n) are arranged between the rib (41) and the rib (4h); that a rib (4o) is arranged between the opening (4b) and the wall (4e); that the opening (4b) is limited with the rib (4o) and a rib (4p); that the openings (4i and 4j,) the rib (41), the rib (4m), the rib (4n), the rib (4o) and the opening between the ribs (4h and 4g) are designed to allow positioning of the cover (6); that the lever (5) is designed as a slightly bent plate (5a) with a cylindrically formed front section (5b); that the plate (5a) has a flat section (5a') that slightly projects to a section (5a") and continues to a section (5c); that the section (5c) of the lever (5) is slightly bent downwards, wherein the upper section is shaped in a way that an ergonomically shaped surface (5d) is formed between the semi-circular sections (5c' and 5c"); that the bottom of the section (5c) is provided with approximately rectangular openings (5e, 5f and 5g), wherein the rectangular surface (5h) is arranged upstream the opening (5e); that the lever (5) is arranged within the casing (4) in a way that the cylindrically shaped front section (5b) is positioned into the rotating point (4c) and the section (5c) is positioned into the opening (4f); that the shape of the top view of the cover (6) corresponds to the lower part of the casing (4); that the external part (6a) of the cover (6) is slightly convex and the almost rectangular opening (6b) is contoured with blades (6c); that in its interior part, the cover (6) has a straight section (6d) with a semi-circular section (61), a projection (6k), a cylindrical section (6j), a rectangular section (6i), a section (6h) in the shape of a rectangular U, a section (6g) in the shape of a rectangular U and sections (6f and 6e) in the shape of triangles; that the splined yoke (2) is arranged into the cover (6); that the safety pin (2) is pre-fastened together with the spring (3) into an entity with the splined yoke (1) without the casing; that a neck (1 a) of the splined yoke (2) is arranged into the opening (6b) provided with blades (6c), wherein a safety pin (2) abuts the rectangular surface (5h) of the lever (5); that the casing (4) with the lever (5) is covered with the cover (6) so that the flat section (6d) engages with the opening (4b) and the semi-circularly shaped section (6l) snaps behind the rib (4o); that the projection (6k) engages between the ribs (4h and 4g) of the casing (4); that the cylindrical section (6j) of the cover (6) engages with the cylindrical section (4k) of the casing (4); that the rectangular section (6i), the section (6h) in the shape of a rectangular U, the section (6g) in the shape of a rectangular U, the sections (6f and 6e) in the shape of triangles engage with the sections on the casing (4); that the neck (1a) of the yoke (1) is arranged with its rectangular groove (1b) into the opening (4b) of the casing (4), into which groove (1b) a spring ring (7) is arranged by way of a special tool and that the upper surfaces of triangular openings (4i and 4j) and the upper sections of ribs (4g and 4h and 4o) get in contact with the internal section of the cover (6).

## Patentansprüche

1. Schutzgehäuseanordnung umfassend einen Kupplungskeilbügel (1) und ein Gehäuse (4) mit einem beweglichen Hebel für den genannten Kupplungskeilbügel (1) mit einem Sicherheitsstift zur Ankupplung und Entkupplung einer Transmissionswelle, wobei das Gehäuse (4) hohl ist und eine Dreieckform mit gerundeten Ecken aufweist, im Gehäuse (4) ist ein mit einem Deckel (6) abgedeckter Hebel (5) angebracht, der einen mit einem Sicherheitsstift (2) und einer Feder (3) versehenen Bügel (1) trägt; der Bügel (1) ist das wesentliche Verbindungselement zur Ankupplung und Entkupplung einer Transmissionswelle; der Sicherheitsstift (2) ist ein Element, das axiale Bewegungen des Kupplungskeilbügels verhindert; die Feder (3) sorgt für eine richtige Position des Sicherheitsstifts (2); das Gehäuse (4) sorgt für eine richtige Position und Funktion der anderen Elementen und verbindet sie zu einer Einheit; der Hebel (5) ermöglicht dem Benutzer weniger Kraft bei der Bewegung des Sicherheitsstifts (2) auszuüben, wenn der Kupplungskeilbügel (1) oder die ganze Transmissionswelle montiert oder demontiert wird; der Deckel (6) des Gehäuses (4) fungiert als Schutz des Inneren des Gehäuses (4) gegen Verunreinigungen aus der Umgebung; ein Federring (7) verhindert die axiale Bewegung des Gehäuses (4) und verhindert, dass das Gehäuse (4) vom Kupplungskeilbügel (1) herunterfällt; der Hebel (5) fungiert als ein Zwischenstück zwischen dem Finger/der Hand des Benutzers und dem Sicherheitsstift (2).

2. Schutzgehäuseanordnung mit einem beweglichen Hebel für den Kupplungskeilbügel mit einem Sicherheitsstift gemäß Anspruch 1, **dadurch gekennzeichnet, dass** das Gehäuse (4) als ein niedriges dreieckiges Gefäß mit einem Rundloch (4b) in der Mitte eines mit gerundeten Wänden (4c, 4d, 4e) umgebenen und mit einer Öffnung (4f) zwischen den Wänden (4c und 4e) beendeten Bodens (4a) ausgebildet ist; dass das Innere des Gehäuses (4) mittels Rippen von verschiedenen Formen in Kammern unterteilt ist; dass sich zwischen der Wand (4e) und der Öffnung (4b) eine Rippe (4b) befindet, die zusammen mit der Rippe (4h) und einem Teil der Wand (4d) eine dreieckige Fläche auf dem Oberteil des Gehäuses (4) bildet; dass an der Rippe (4g) ein Drehpunkt (4k) des Hebels (5) ausgebildet ist; dass an der Wand (4c) dreieckige Öffnungen (4i und 4j) ausgebildet sind; dass sich am gerundeten Kontakt zwischen den Wänden (4c und 4d) eine Rippe (4l) befindet; dass eine Rippe (4m) und eine Rippe (4n) zwischen der Rippe (4l) und der Rippe (4h) ausgebildet sind; dass eine Rippe (4o) zwischen der Öffnung (4b) und der Wand (4e) ausgebildet ist; dass die Öffnung (4b) mit der Rippe (4o) und einer Rippe (4p) begrenzt ist; dass die Öffnungen (4i und 4j), die Rippe (4l), die Rippe (4m), die Rippe (4n), die Rippe (4o) und die Öffnung zwischen der Rippen (4h und 4g) derart ausgestaltet sind, dass sie die Anbringung des Deckels (6) ermöglichen; dass der Hebel (5) als eine leicht gekrümmte Platte (5a) mit einem zylindrisch geformten Vorderteil (5b) ausgebildet ist; dass die Platte (5a) ein flaches Teil (5a'), der etwas in ein Teil (5a") hineinragt und in das Teil (5c) weitergeht, aufweist; dass das Teil (5c) des Hebels (5) ein wenig nach unter gekrümmt ist, wobei das Oberteil derart ausgebildet ist, dass sich zwischen den halbkreisförmigen Teilen (5c' und 5c") eine ergonomisch geformte Fläche (5d) bildet; dass der Boden des Teils (5c) mit etwa rechteckförmigen Öffnungen (5e, 5f und 5g) versehen ist, wobei sich die rechteckförmige Fläche (5h) aufwärts der Öffnung (5e) befindet; dass der Hebel (5) ins Innere des Gehäuses (4) derart angebracht ist, dass das zylindrisch geformte Vorderteil (5b) in den Drehpunkt (4c) angebracht ist und das Teil (5c) in die Öffnung (4f) angebracht ist; dass die Form der Draufsicht des Deckels (6) mit dem Unterteil des Gehäuses (4) übereinstimmt; dass das Außenteil (6a) des Deckels (6) etwas gewölbt ist und eine fast rechteckförmige mit Blättern (6c) umrissene Öffnung (6b) aufweist; dass der Deckel (6) in seinem inneren Teil ein gerades Teil (6d) mit einem halbkreisförmigen Teil (61), einem Vorsprung (6k), einem zylindrischen Teil (6j), einem rechteckigen Teil (6i), einem Teil (6h) in Form eines rechteckigen U, einem Teil (6g) in Form eines rechteckigen U und Teile (6f und 6e) in Form von Dreiecken aufweist; dass der Keilbügel (2) im Deckel (6) angebracht ist; dass der Sicherheitsstift (2) im Voraus zusammen mit der Feder (3) zu einer Einheit mit dem Keilbügel (1) ohne Gehäuse befestigt ist;
dass ein Hals (1a) des Keilbügels (2) in der mit Blättern (6c) versehenen Öffnung (6b) angebracht ist, wobei der Sicherheitsstift (2) an die rechteckige Fläche (5h) des Hebels (5) anlehnt; dass das Gehäuse (4) mit dem Hebel (5) mit dem Deckel (6) derart abgedeckt ist, dass das flache Teil (6d) in die Öffnung (4b) eingreift und das halbkreisförmige Teil (61) hinter der Rippe (4o) einrastet; dass der Vorsprung (6k) zwischen den Rippen (4h und 4g) des Gehäuses (4) eingreift; dass das zylindrische Teil (6j) des Deckels (6) mit dem zylindrischen Teil (4k) des Gehäuses (4) ineinandergreift; dass das rechteckige Teil (6i), das Teil (6h) in Form eines rechteckigen U, das Teil (6g) in Form eines rechteckigen U, die Teile (6f und 6e) in Form von Dreiecken mit den Teilen auf dem Gehäuse (4) eingreifen; dass der Hals (1 a) des Bügels (1) mit seiner rechteckigen Nut (1b) in die Öffnung (4b) des Gehäuses angebracht ist, in welche Nut (1b) ein Federring (7) anhand von einem speziellen Werkzeug angebracht ist, und dass sich die Oberflächen der dreieckigen Öffnungen (4i und 4j) und die Oberteile der Rippen (4g und 4h und 4o) mit dem inneren Teil des Deckels (6) berühren.

## Revendications

1. Un assemblage de boîtier de protection comprenant une fourche d'accouplement cannelée (1) et un boîtier (4) avec un levier mobile pour ladite fourche d'accouplement cannelée (1) possédant une goupille de sûreté pour l'accouplement ou le désaccouplement d'un arbre de transmission où le boîtier (4) est creux et de forme triangulaire avec des angles arrondis et, dans le boîtier (4), est disposé un levier (5) recouvert d'un couvercle (6) qui porte une fourche (1) équipée d'une goupille de sûreté (2) et d'un ressort (3); la fourche est l'élément de liaison essentiel pour l'accouplement ou le désaccouplement d'un arbre de transmission; la goupille de sûreté (2) est un élément qui empêche les déplacements axiaux de la fourche d'accouplement cannelée (1); le ressort (3) permet à la goupille de sûreté (2) de prendre une position appropriée; le boîtier (4) permet aux éléments restants de prendre une position correcte et de fonctionner correctement et il les assemble en une entité; le levier (5) permet à un utilisateur d'exercer moins de force lorsqu'il déplace la goupille de sûreté (2) lors du montage et du démontage de la fourche d'accouplement cannelée (1) ou de l'ensemble de l'arbre de transmission; le couvercle (6) du boîtier (4) joue un rôle de protection pour l'intérieur du boîtier (4) en le protégeant des impuretés provenant de l'environnement; une bague élastique (7) interdisant le déplacement axial du boîtier (4) et empêchant le boîtier (4) de tomber de la fourche d'accouplement cannelée (1); le levier (5) joue le rôle d'intermédiaire entre le doigt ou la main d'un utilisateur et la goupille de sûreté (2).

2. Un assemblage de boîtier de protection à levier mobile pour une fourche d'accouplement cannelée possédant une goupille de sûreté selon la revendication 1 **caractérisé en ce que** le boîtier (4) a une forme de récipient triangulaire peu profond doté d'une ouverture arrondie (4b) au centre d'un fond (4a) possédant des parois arrondies (4c, 4d, 4e) et se terminant par une ouverture (4f) entre les parois (4c et 4e); **en ce que** l'intérieur du boîtier (4) est divisé en chambres par des nervures de diverses formes; **en ce qu'**une nervure (4g) se trouve entre la paroi (4e) et l'ouverture (4b) et forme, avec la nervure (4h) et une partie de la paroi (4d), une surface triangulaire sur la partie supérieure du boîtier (4); **en ce qu'**un point de rotation (4k) du levier (5) est conçu sur la nervure (4g); **en ce que** les ouvertures triangulaires (4i et 4j) sont conçues sur la paroi (4c); **en ce qu'**une nervure (41) est agencée sur le point de contact arrondi entre les parois (4c et 4d); **en ce qu'**une nervure (4m) et une nervure (4n) sont disposées entre la nervure (41) et la nervure (4h); **en ce qu'**une nervure (4o) est disposée entre l'ouverture (4b) et la paroi (4e); **en ce que** l'ouverture (4b) est limitée par la nervure (4o) et la nervure (4p); **en ce que** les ouvertures (4i et 4j,) la nervure (4l), la nervure (4m), la nervure (4n), la nervure (4o) et l'ouverture entre les nervures (4h et 4g) sont conçues pour permettre le placement du couvercle (6); **en ce que** le levier (5) est conçu comme une plaque légèrement pliée (5a) avec une section avant de forme cylindrique (5b); **en ce que** la plaque (5a) possède une section plate (5a') qui s'avance légèrement vers la section (5a") et continue vers la section (5c); **en ce que** la section (5c) du levier (5) est légèrement pliée vers le bas, où la section supérieure est formée de sorte qu'une surface de forme ergonomique (5d) soit créée entre les sections semi-circulaires (5c' et 5c"); **en ce que** le bas de la section (5c) est muni d'ouvertures approximativement rectangulaires (5e, 5f et 5g), la surface rectangulaire (5h) étant disposée en amont de l'ouverture (5e); **en ce que** le levier (5) est agencé avec le boîtier (4) de sorte que la section avant de forme cylindrique (5b) soit placée à l'intérieur du point de rotation (4c) et la section (5c) soit placée dans l'ouverture (4f); **en ce que** la forme de la vue d'en haut du couvercle (6) correspond à la partie inférieure du boîtier (4); **en ce que** la partie externe (6a) du couvercle (6) est légèrement convexe et l'ouverture presque rectangulaire (6b) est entourée de lames (6c); **en ce que** dans sa partie intérieure, le couvercle (6) possède une section droite (6d) avec une section semi-circulaire (6l), un élément en saillie (6k), une section cylindrique (6j), une section rectangulaire (6i), une section (6h) en forme de U rectangulaire, une section (6g) en forme de U rectangulaire et des sections (6f et 6e) en forme de triangles; **en ce que** la fourche cannelée (2) est disposée dans le couvercle (6); **en ce que** la goupille de sûreté (2) est préfixée avec le ressort (3) en une entité avec la fourche cannelée (1) sans le boîtier; **en ce qu'**un goulot (1a) de la fourche cannelée (2) est placée dans l'ouverture (6b) munie de lames (6c), une goupille de sûreté (2) butant contre la surface rectangulaire (5h) du levier (5); **en ce que** le boîtier (4) avec le levier (5) est couvert par le couvercle (6) de sorte que la section plate (6d) s'enclenche avec ouverture (4b) et que la section de forme semi-circulaire (61) s'encliquette derrière la nervure (4o); **en ce que** l'élément en saillie (6k) vienne se loger entre les nervures (4h et 4g) du boîtier (4); **en ce que** la section cylindrique (6j) du couvercle (6) vient s'enclencher avec la section cylindrique (4k) du boîtier (4); **en ce que** la section rectangulaire (6i), la section (6h) en forme de U rectangulaire, la section (6g) en forme de U rectangulaire, les sections (6f et 6e) en forme de triangles s'enclenchent avec les sections sur le boîtier (4); **en ce que** le goulot (1 a) de la fourche (1) est placé avec sa rainure rectangulaire (1 b) dans l'ouverture (4b) du boîtier (4), rainure (1 b) à l'intérieure de laquelle une bague élastique (7) est placée à l'aide d'un outil spécial et **en ce que** les surfaces supérieures des ouvertures triangulaires (4i et 4j) et les sections supérieures des nervures (4g et 4h et 4o) entrent en contact avec la section interne du couvercle (6).
